# EUROPEAN PATENT APPLICATION

(11) **EP 4 119 521 A1**
(43) Date of publication of application: **18.01.2023**
(21) Application number: 21186031.7
(22) Date of filing: 16.07.2021
(51) Int. Cl.: C04B 28/04

(54) **DRY MORTAR COMPOSITION**

(71) Applicant: Saint-Gobain Weber France, 94370 Sucy en Brie (FR)
(72) Inventor: CARDOSO DA SILVA, Luis, 3810-332 Aveiro (PT); MARTY-BOUCHAR, Marie, 95880 Enghien-les-Bains (FR); YAMMINE-MALESYS, Joumana, 924000 Courbevoie (FR); PEREIRA FERNANDES, Vera Lucia, 3810-332 Santa Joana, Aveiro (PT)
(74) Representative: Saint-Gobain Recherche

(57) **Abstract**

The invention relates to a dry mortar composition comprising cement and biomass ashes, in a total amount of 10 to 50wt%, and aggregates in a total amount of 50 to 90wt%, wherein the weight ratio of biomass ashes to cement ranges from 40:60 to 90:10. The mortar is especially useful as a tile adhesive.

## Description

The present invention relates to a dry mortar composition.

A dry mortar composition is a pulverulent mixture comprising a hydraulic binder and aggregates. After mixing with water, it forms a paste, called wet mortar, that can be applied on various substrates before setting and hardening, finally forming a hardened mortar. Mortars can for example be used as renders, plasters, flooring compounds, tile adhesives, grouts...

The aim of the invention is especially to provide a mortar that can be used as a tile adhesive.

Tile adhesives must meet a number of requirements, both in terms of ease of use when laying tiles and in terms of the properties of the hardened mortar after laying. For example, EN 12004-1 Standard requires a tensile adhesion strength of at least 0.5 N/mm² (class C1 adhesive) or even at least 1 N/mm² (class C2 adhesive), even after immersion in water, heat or freezing-thawing. The open time, the maximum time between the bonding of the substrate and the laying of the tiles while maintaining an adhesion of at least 0.5 N/mm², must be at least 20 minutes, preferably at least 30 minutes for an extended open time adhesive - noted "E". The transverse deformation according to EN 12004 is preferably at least 2.5 mm (S1 deformability) or at least 5 mm (S2 deformability). Setting and curing time, workability, consistency of the wet mortar, and the effort required for application are also parameters to be taken into account.

A goal to be achieved is also related to the CO₂ footprint of the mortar. The hydraulic binder used in mortars for tile adhesives is often cement, especially Portland cement, whose production requires huge amounts of energy and releases large amounts of CO₂ in the atmosphere. There is in consequence a need to provide mortar compositions that have a much lower CO₂ footprint while meeting the requirements for tile adhesives.

These objectives are achieved by means of a dry mortar composition comprising cement and biomass ashes, in a total amount of 10 to 50wt%, and aggregates in a total amount of 50 to 90wt%, wherein the weight ratio of biomass ashes to cement ranges from 40:60 to 90:10.

Another object of the invention is a tile adhesive made by mixing this dry mortar composition with water to form a paste.

A further object of the invention is the use of the dry mortar composition as a tile adhesive. The term "tile adhesive" encompasses both the dry mortar composition itself and the paste (also called wet mortar) obtained by mixing the dry mortar composition with water.

Still another object of the invention is a method for adhering tiles on a substrate, comprising applying the abovementioned tile adhesive to said substrate, then applying said tiles to said substrate. This method then comprises mixing the dry mortar composition with water to form a paste, applying said paste to the substrate, then applying the tiles to the substrate.

The inventions have surprisingly shown that tile adhesives meeting the abovementioned requirements could be obtained by partially replacing cement, especially Portland cement, with a large amount of biomass ashes. The rate of replacement is at least 40%, and even preferably at least 50%, and can be up to 90%. The CO₂ footprint of the mortar is therefore largely reduced. As described in more detail in the present specification, the inventors have especially shown that biomass ashes have an important contribution to the formation of hydrates.

The total amount of cement and biomass ashes, i.e. the sum of their respective amounts, ranges from 10 to 50wt%, preferably from 15 to 45wt%, even from 20 to 40wt%.

The cement is preferably selected from Portland cement, Calcium Aluminate Cements, Calcium sulfoaluminate cements and mixtures thereof.

The cement can consist of one type of cement. Alternatively, the cement can be a mixture of several types of cements. In the latter case, the term "cement" encompasses all the cements comprised in the composition, and the amount of cement (also called "total amount of cement") is the sum of the respective amounts of each and every particular cement comprised in the composition, i.e. the total amount of all cements comprised in the composition.

The cement most preferably comprises a CEM I cement according to the EN 197-1 Standard, also called Ordinary Portland cement. The cement preferably consists of (or in other words is) a CEM I cement according to the EN 197-1 Standard. CEM I 42.5 or CEM I 52.5 are especially preferred.

The amount of cement is preferably 5-25wt%, especially 7-18wt%. The amount of biomass ashes is preferably 8-30wt%, especially 10-28wt%, with respect to the total weight of dry mortar composition.

The weight ratio of biomass ashes to cement is preferably 45:55 to 85:15. According to a preferred embodiment, this weight ratio is especially 45:55 to 60:40, even 48:52 to 55:45. According to another preferred embodiment, this weight ratio is 70:30 to 90:10, or even 75:25 to 85:15. The weight ratio of biomass ashes to cement is calculated by dividing the total amount by weight of biomass ashes by the total amount by weight of cement.

The dry mortar composition may further comprise slag and/or metakaolin, preferably in an amount up to 10wt%, especially up to 5wt%. The total amount of slag and metakaolin is preferably 0.5-10wt%, especially 1-5wt%. The slag is preferably selected from blast furnaces slags, basic oxygen furnace slags, electric arc furnace slags, ladle slags and mixtures thereof. The presence of slag or metakaolin makes it possible to increase adhesion after water immersion and in freeze-thaw curing conditions.

The dry mortar may also comprise silica fume, pozzolana, fly ashes from coal combustion and mixtures thereof. In that case, the total amount of these compounds is preferably 0.5-10wt%, even 1-5wt%.

Biomass ashes are ashes formed during the combustion of biomass, used for example to produce electricity, steam or heating. Biomass may for example come from agricultural products, from forestry products, from domestic and municipal wastes and/or from energy crops.

The biomass ashes advantageously comprise, or even consist of, wood ashes. Wood ashes are generated during the combustion of wood and wood products. Wood ashes are especially obtained from the combustion of forestry residues, wastes (barks, sawdusts...), wood, wood residues or residues from the pulp or wood industries. The biomass may for example be produced during logging activities for the pulp or other wood-related industries and forest cleaning for wildfire prevention.

Preferably, the biomass ashes comprise, or even consist of, fly ashes obtained from combustion of wood, bark, forestry residues and/or wood residues. Combustion is preferably carried out by fluidized bed combustion, especially by bubbling fluidized bed combustion. Other combustion processes are fixed bed combustion or circulating fluidized bed combustion. Wood is preferably chosen from pine and eucalyptus. Fly ashes are recovered from the flue gases (for example by filtration), as opposed to the bottom ashes, which are recovered from the bottom of the boiler.

The biomass ashes preferably have an average chemical composition comprising 40-55wt% SiO₂, 5-12% Al₂O₃, 1-7wt% Fe₂O₃, 6-23wt% CaO and 1-7wt% K₂O. A particularly preferred chemical composition comprises 45-52wt% SiO₂, 8-10% Al₂O₃, 2-5wt% Fe₂O₃, 8-20wt% CaO and 2-5wt% K₂O. The loss on ignition is preferably less than 10wt%, especially less than 5wt%.

In terms of particle size, the D50 (based on volume distribution) of the biomass ashes is preferably from 10 µm to 30 µm, especially around 20 µm. The maximum size (Dmax) is preferably 100 µm or less. These dimensions are typically measured by laser granulometry.

The aggregates are preferably selected from siliceous, calcareous aggregates, dolomitic aggregates and mixtures thereof. Examples are ground limestone or dolomite and silica sand. The aggregates preferably comprise sands (size 0-5 mm), and possibly fillers (size 0-0.1 mm). The aggregates preferably comprise (or even consist of) silica sand. A mixture of silica sand and limestone is also possible. When the mortar is used as a tile adhesive, the maximum size of the aggregates is preferably 2 mm.

The total amount of aggregates preferably ranges from 55 to 85wt%, especially from 58 to 80wt%, even from 60 to 75wt%.

The average diameter (D50) of the aggregates, based on a volume distribution, is preferably 0.20 mm or less, especially 0.15 mm and less, even 0.10 mm and less.

It has been observed by the inventors that biomass ashes had a contribution to the formation of hydrates in addition to those obtained by hydration of cement. Micro-calorimetry analyses have indeed shown that the total heat released by the hydration of mixtures of biomass ashes and Ordinary Portland cement (OPC), in ratios of 50/50 and 80/20, for up to 6 days, was greater than the total heat release expected if there had been only a dilution effect of the OPC by the biomass ashes. The total heat release at 6 days is indeed 200 J/g of mixture for a 50/50 mixture, and 120 J/g of mixture for an 80/20 mixture. For pure OPC, the total heat release if 300 J/g.

The dry mortar composition preferably comprises at least one accelerator, in order to accelerate the set and hardening of the mixture of cement and biomass ashes.

Accelerators are for example alkali salts, such as lithium (or potassium) sulfates or carbonates, or organic salts such as calcium formate. The total amount of accelerators is preferably 0.1 to 3.0wt%, especially 0.2 to 2.0wt%.

Other accelerators are sodium silicate, such as sodium metasilicate and/or lime. These accelerators are especially useful for compositions where the weight ratio biomass ashes/cement is high, for example above 60:40 or above 70:30.

The dry mortar may if needed comprise retarders, for example carboxylic acids such as tartaric or citric acids or their salts. The total amount of retarders is preferably 0.01 to 1.0wt%.

The dry mortar composition preferably comprises one or more additive chosen from redispersible polymer powders, defoamers, stabilizers, thickeners, water-retention agents, shrinkage-reducing agents, hydrophobic agents, plasticizers and superplasticizers. The total amount of such additives is preferably 0.1 to 8.0wt%, especially 0.5 to 3.0wt%.

The dry mortar composition more preferably preferably comprises redispersible polymer powders and water-retention agents.

Thickeners and water-retention agents are for example cellulose ethers and/or starch ethers. Their total amount is preferably 0.1 to 0.6wt%, especially 0.2 to 0.5wt%. These additives make it possible to improve workability of the paste.

The redispersible polymer powder preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins (such as ethylene or propylene), dienes and vinyl halides. Particularly preferred polymers are copolymers of at least two of the abovementioned monomers, especially vinyl acetate-ethylene copolymers, vinyl ester-ethylene-vinyl chloride copolymers ,vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrenebutadiene copolymers, styrene-acrylate copolymers, vinyl acetate-(meth)acrylic acid-ethylene terpolymers. The amount of redispersible polymer powder is preferably 0.2 to 8.0wt%, especially 0.5 to 6.0wt%.

The ratio of water to the dry mortar composition ("water ratio") preferably ranges from 0.15 to 0.30 by weight, in order to get the right consistency for the paste (wet mortar). This corresponds to a water dosage of 15 to 30% (added to 100% of dry mortar).

The paste formed by mixing the dry mortar composition with water is applied on the substrate by the usual techniques.

The substrate is typically a wall or a partition, or a floor, for example a screed.

The tiles or slabs of the tiling may be of various materials, such as ceramic, sandstone, cement, stone, marble, etc. The wet mortar (adhesive) may be applied to the substrate, and possibly also to the tiles or slabs, by means of a glue comb, a hawk, a float, a trowel or a notched trowel.

The tile adhesive is preferably classified as C1, C2 or C2S according to the EN 12004-1:2017 Standard.

Other applications of the dry mortar composition are possible, for example for façade renders or plasters, flooring compounds (such as screeds) or tile grouts. It may also be used in a 3D-printing process for manufacturing construction elements, such as walls.

The following examples illustrate the invention in a non-limitative way.

Dry mortar compositions to be used as tile adhesives have been obtained by mixing different ingredients. The following tables (1 and 2) show the compositions (in wt%) and some measured properties for the comparatives examples (C1 to C5) and the examples according to the invention (1 to 6) .

The only cement of the compositions is a CEM I 42.5 cement, noted "OPC" in the tables.

Biomass ashes are wood ashes, more specifically fly ashes obtained from combustion of forest biomass (especially eucalyptus and pine) in a bubbling fluidized bed boiler. Their chemical composition comprises 45-52wt% SiO₂, 8-10% Al₂O₃, 2-5wt% Fe₂O₃, 8-20wt% CaO and 2-5wt% K₂O, LOI < 5wt%. Their D50 (based on volume distribution) is 20 µm and its maximum size (Dmax) is 80 µm. The biomass ashes are provided by The Navigator Company, Cacia, Aveiro, Portugal.

The ratio "R" is the weight ratio of biomass ashes to cement.

The slag is a ground granulated blast furnace slag. Cellulose ether is a hydroxyethyl methylcellulose, having a viscosity between 20000 and 40000 mPas (after addition of water). Starch ether belongs to type 1. The accelerator is calcium formate. The "resin" is a redispersible powder which is an EVA copolymer, having a Tg of 16°C.

For each example, the tables show the results in terms of setting time at 5°C et 22°C, tensile adhesion strength in different conditions (measured according to EN 12004-2 Standard) and transverse deformation (measured according to EN 12002 Standard), and the classification according to EN12004-1 Standard relating to tile adhesives. The tables also show the CO₂-equivalent emission, per kg of mortar, calculated with the ecoinvent database.

These results show that the replacement of at least 40% of OPC by biomass ashes makes it possible to reduce the CO₂ emission by 20 to 35% while surprisingly keeping high adhesion and reactivity performances. The obtained mortars can be used as tile adhesives that meet the requirements of the EN 12004-1 Standard, even for very high replacement rates.

**[Table 1]**

| | C1 | 1 | C2 | 2 | 3 |
|---|---|---|---|---|---|
| OPC | 20 | 10 | 20 | 10 | 13.5 |
| Biomass ashes | 0 | 10 | 0 | 10 | 13.5 |
| R | 0 | 50:50 | 0 | 50:50 | 50:50 |
| Slag | 0 | 2.5 | 0 | 2.5 | 0 |
| Silica sand | 79.72 | 76.72 | 78.22 | 75.72 | 71.17 |
| Cellulose ether | 0.22 | 0.25 | 0.25 | 0.25 | 0.30 |
| Starch ether | 0.03 | 0.03 | 0.03 | 0.03 | 0.03 |
| Resin | 0 | 0 | 1.0 | 1.0 | 1.0 |
| Accelerator | 0 | 0.5 | 0.5 | 0.5 | 1.0 |
| Water dosage (%) | 20 | 23 | 21 | 23 | 24 |

| Setting time (h) | | | | | |
|---|---|---|---|---|---|
| 5°C | 35 | 35 | 35 | 35 | 35 |
| 22°C | 11 | 13 | 12 | 13 | 12 |

| Tensile Adhesion strength (MPa) | | | | | |
|---|---|---|---|---|---|
| Initial | 0.55 | 0.71 | 0.58 | 0.78 | 0.90 |
| Heat storage | - | - | 0.51 | 0.55 | 0.58 |
| Water immersion | 0.51 | 0.56 | 0.57 | 0.75 | 0.75 |
| Freeze-thaw | - | - | 0.65 | 0.53 | 0.54 |
| EN 12004 class | C, NDV | C, NDV | C1 | C1 | C1 |
| CO₂ | 207 | 133 | 244 | 165 | 194 |

**[Table 2]**

| | C3 | C4 | 4 | C5 | 5 | 6 |
|---|---|---|---|---|---|---|
| OPC | 27 | 26.25 | 17.5 | 35 | 17.5 | 7 |
| Biomass ashes | 0 | 8.75 | 17.5 | 0 | 17.5 | 28 |
| R | 0 | 33:67 | 50:50 | 0 | 50:50 | 80:20 |
| Slag | 0 | 0 | 2.5 | 0 | 2.5 | 2.5 |
| Silica sand | 69.67 | 61.66 | 59.22 | 59.12 | 56.72 | 59.22 |
| Cellulose ether | 0.30 | 0.30 | 0.25 | 0.35 | 0.25 | 0.25 |
| Starch ether | 0.03 | 0.04 | 0.03 | 0.03 | 0.03 | 0.03 |
| Resin | 2.5 | 2.5 | 2.5 | 5.0 | 5.0 | 1.0 |
| Accelerator | 0.5 | 0.5 | 1.5 | 0.5 | 1.5 | 0.5 |
| Sodium metasilicate | 0 | 0 | 0 | 0 | 0 | 1.0 |
| Lime | 0 | 0 | 0 | 0 | 0 | 1.0 |
| Water dosage (%) | 22 | 23 | 24 | 23 | 25 | 24 |

| Setting time (h) | | | | | | |
|---|---|---|---|---|---|---|
| 5°C | 35 | 35 | 35 | 35 | 35 | 40 |
| 22°C | 10 | 11 | 12 | 10 | 12 | 12 |

| Tensile Adhesion strength (MPa) | | | | | | |
|---|---|---|---|---|---|---|
| Initial | 1.10 | 1.25 | 1. 05 | 1.30 | 1. 05 | 1. 05 |
| Heat storage | 1. 00 | 1.37 | 1.10 | 1.45 | 1.35 | 0.50 |
| Water immersion | 1. 05 | 1. 00 | 1. 05 | 1. 00 | 1. 05 | 0.70 |
| Freeze-thaw | 1.10 | 1.10 | 1.10 | 1.10 | 1. 00 | 0.62 |
| Transverse deformation (mm) | - | - | - | 2.5 | 2.5 | - |
| EN 12004 class | C2 | C2 | C2 | C2S | C2S | C1 |
| CO₂ | 349 | 327 | 272 | 494 | 352 | 147 |

## Claims

1. A dry mortar composition comprising cement and biomass ashes, in a total amount of 10 to 50wt%, and aggregates in a total amount of 50 to 90wt%, wherein the weight ratio of biomass ashes to cement ranges from 40:60 to 90:10.

2. The dry mortar composition as claimed in Claim 1, wherein the total amount of cement and biomass ashes ranges from 15 to 45wt% and the total amount of aggregates ranges from 55 to 85wt%.

3. The dry mortar composition as claimed in any one of the preceding Claims, further comprising slag and/or metakaolin, in a total amount of 0.5-10wt%, especially 1-5wt%.

4. The dry mortar composition as claimed in any one of the preceding Claims, wherein the amount of cement is 5-25wt%, especially 7-18wt%, and the amount of biomass ashes is 8-30wt%, especially 10-28wt%.

5. The dry mortar composition as claimed in any one of the preceding Claims, wherein the cement is a CEM I cement according to the EN 197-1 Standard.

6. The dry mortar composition as claimed in any one of the preceding Claims, wherein the biomass ashes comprise wood ashes.

7. The dry mortar composition as claimed in the preceding Claim, wherein the biomass ashes comprise fly ashes obtained from combustion of wood, bark, forestry residues and/or wood residues by fluidized bed combustion.

8. The dry mortar composition as claimed in any one of the preceding Claims, wherein the biomass ashes have an average chemical composition comprising 40-55wt% SiO₂, 5-12% Al₂O₃, 1-7wt% Fe₂O₃, 6-23wt% CaO and 1-7wt% K₂O.

9. The dry mortar composition as claimed in any one of the preceding Claims, wherein the weight ratio of biomass ashes to cement ranges from 45:55 to 85:15, especially from 45:55 to 60:40.

10. The dry mortar composition as claimed in any one of the preceding Claims, wherein the aggregates are selected from siliceous, calcareous aggregates, dolomitic aggregates and mixtures thereof.

11. The dry mortar composition as claimed in any one of the preceding Claims, further comprising at least one accelerator.

12. The dry mortar composition as claimed in any one of the preceding Claims, comprising one or more additive chosen from redispersible polymer powders, pigments, defoamers, stabilizers, thickeners, shrinkage-reducing agents, hydrophobic agents, plasticizers and superplasticizers.

13. A tile adhesive made by mixing the dry mortar composition as claimed in any one the preceding Claims with water to form a paste.

14. A method for adhering tiles on a substrate, comprising mixing the dry mortar composition according to any one of Claims 1 to 12 with water to form a paste, applying said paste to said substrate, then applying the tiles to said substrate.

15. The use of the dry mortar composition according to any one of Claims 1 to 12 as a tile adhesive.
